# EUROPÄISCHE PATENTSCHRIFT

(11) **EP 1 830 633 B1**
(45) Veröffentlichungstag und Bekanntmachung des Hinweises auf die Patenterteilung: **14.09.2011**
(21) Anmeldenummer: 05821595.5
(22) Anmeldetag: 22.12.2005
(51) Int. Cl.: A01K 89/015

(54) **SCHNURFÜHRUNG FÜR EINE ROLLENEINHEIT SOWIE ROLLENEINHEIT MIT EINER SOLCHEN SCHNURFÜHRUNG**
LINE GUIDE FOR A REEL UNIT AND REEL UNIT COMPRISING SUCH A LINE GUIDE
ANNEAU POUR UNE UNITE DE MOULINET ET UNITE DE MOULINET COMPORTANT UN TEL ANNEAU

(30) Priorität: 27.12.2004 DE 102004062886
(43) Veröffentlichungstag der Anmeldung: 12.09.2007
(73) Patentinhaber: Klein, Helmut, 94526 Metten (DE)
(72) Erfinder: Klein, Helmut, 94526 Metten (DE)
(74) Vertreter: Glück, Martin
(86) Internationale Anmeldenummer: PCT/DE2005/002304
(87) Internationale Veröffentlichungsnummer: WO 2006/069561

(56) Entgegenhaltungen:
- WO-A-00/78133
- US-A- 1 001 857
- US-A- 2 331 919
- US-A- 3 913 859
- US-B1- 6 315 228

## Beschreibung

Die Erfindung bezieht sich auf eine Schnurführung gemäß Oberbegriff dem Patentanspruch 1 sowie auf eine Rolleneinheit gemäß dem Oberbegriff des Patentanspruch 11.

Zum Auf- und Abwickeln der Angelschnur sind so genannte Rolleneinheiten bekannt, die an einer Angelgerte befestigbar sind und an einem Gehäuse eine drehbar gelagerte Rolle oder Spule für die Angelschnur aufweisen. Bekannt sind insbesondere auch Rolleneinheiten, bei denen die Spule um eine Achse drehbar an der Angelrute oder Angelgerte vorgesehen ist, die senkrecht zu einer die Längsachse der Gerte einschließenden Ebene orientiert ist. Derartige Rolleneinheiten sind in der Fachwelt unter dem Begriff "Multirollen" bekannt. Das manuelle Drehen der Spule, insbesondere einer derartigen Multirolle erfolgt über eine seitlich an dem Gehäuse vorgesehene Kurbel, die über ein Getriebe, insbesondere ein Wendegetriebe antriebsmäßig mit der Spule verbunden ist. Das Getriebe bzw. Wendegetriebe ist mit einer Rücklaufsperre versehen, die manuell entriegelbar ist und im nicht entriegelten Zustand ein Drehen der Spule im Sinne eines Einholens der Angelschnur ermöglicht, jedoch ein Drehen der Spule in entgegengesetzter Richtung aber sperrt. Eine vorhandene Schnurführung weist hierbei immer nach vorne.

Üblicherweise wird die Rolleneinheit auf der Gerte stehend, also oberhalb der Gerte montiert. Die Kurbel für den manuellen Antrieb der Spule befindet sich dabei auf der rechten Seite des Gehäuses. Die Ausbildung wurde ursprünglich aus Amerika übernommen, da dort viele Linkshänder die Gerte mit der linken Hand führen und mit der rechten Hand die Kurbel bedienen. Für Rechtshänder, die die Gerte mit der rechten Hand führen und mit der linken Hand die Kurbel bedienen wollen, ist diese Ausführung nicht geeignet. Die Kurbel müsste sich dann bei einer stehenden Anordnung der Rolleneinheit auf der linken Seite des Gehäuses befinden. Es sind somit für Rechtshänder und Linkshänder unterschiedliche Versionen der Rolleneinheiten erforderlich. Gleiches gilt dann, wenn die Rolleneinheit hängend, d.h. unter der Gerte befestigt werden soll. Auch hier sind grundsätzlich für Links- und Rechtshänder unterschiedliche Versionen notwendig. Aufgrund der Ausgestaltung der Schnurführung ist es auch nicht möglich, eine für die stehende Montage vorgesehene Version der Schnurführung ohne weiteres für die hängende Montage zu verwenden. Vielmehr sind hierbei Modifikationen der Schnurführung bzw. ein Umbau der Schnurführung erforderlich.

Nachteilig bei bekannten Rolleneinheiten mit Schnurführung ist unter anderem, dass beispielsweise nach einem Reparieren einer gerissenen Angelschnur sich die Schnurführung in der Regel nicht in der für das weitere Abwickeln der Angelschnur optimalen bzw. richtigen Position befindet, d.h. beispielsweise bezogen auf die letzte, auf der Spule aufgewickelte Windung der Angelschnur axial versetzt ist, so dass z.B. ein ordnungsgemäßes Abwickeln der Angelschnur von der Spule in mehreren Lagen mit jeweils dicht aneinander anschließenden Windungen nicht mehr bzw. nur durch vollständiges Abwickeln und erneutes komplettes Aufwickeln der Angelschnur nach einer Reparatur der Angelschnur möglich ist. Durch eine derartig quer zur Spule aufgewickelten Schnur wird die Schnurführung enormen seitlichen Belastungen ausgesetzt, die zu einem vorzeitigen Verschleiß der Schnur führen.

Ferner ist aus der US-A- 3 913 859 eine Schnurführung bekannt, die auf einer Rolleneinheit montiert ist. Die Schnurführung ist mittels eines Hubradgetriebes realisiert, bei dem über ein Zahnrad die Drehbewegung der Spule in eine Schwenkbewegung parallel zur Längsachse der Spule der Schnurführung umgesetzt wird. Das Hubradgetriebe weist eine drehbar gelagerte Welle auf, auf der ein Schlittenelement beweglich angeordnet ist. Zum Antrieb des Schlittenelementes wird die Welle über eines von zwei Zahnrädern abwechselnd im Uhrzeigersinn oder im Gegenuhrzeigersinn angetrieben, und zwar durch ein weiteres Zahnrad. Das Zahnrad ist am einen Ende einer Welle vorgesehen, an dessen gegenüberliegenden Ende ein "worm"-Zahnrad angeordnet ist. Das "worm"-Zahnrad steht mit einem "worm" in Wirkverbindung, wobei der "worm" über eine Welle und eine Kupplung mit dem Antrieb der Spule verbindbar ist.

Aus der US-A-2 331 919 sind zwei unterschiedliche mechanische Lösungen zum Antrieb einer Schnurführung zu entnehmen, wobei beide Ausführungsformen jeweils eine Kreuzschnecke verwenden, mittels der eine oszillierende Bewegung einer Schnurführung erzeugt wird. Zur Erzeugung der oszillierenden Bewegung steht ein Schwenkhebel bzw. eine Schlittenelement mit der jeweiligen Kreuzschnecke in Wirkverbindung, und zwar über jeweils zumindest ein in die Kreuzschnecke eingreifendes Stiftelement.

Aufgabe der Erfindung ist es, eine Schnurführung bzw. eine Rolleneinheit mit einer derartigen Schnurführung aufzuzeigen, die diesen Nachteil vermeidet und auch beispielsweise nach einer Reparatur einer gerissenen Angelschnur ein weiteres optimales Auf- und Abwickeln in einfacher Weise gestattet. Zur Lösung dieser Aufgabe ist eine Schnurführung entsprechend dem Patentanspruch 1 ausgebildet. Eine Rolleneinheit mit einer solchen Schnurführung ist Gegenstand des Patentanspruches 11.

Bei der erfindungsgemäßen Schnurführung ist die Schlittenführung als spindelförmige Pilotwelle ausgestaltet und das zugehörige Schlittenelement weist zur Führung auf der spindelförmigen Pilotwelle einen Führungskanal mit einem Innengewinde auf. Ferner ist an der spindelförmigen Pilotwelle ein Pilotzahnrad vorgesehen, dass mit einem Stirnrad zusammenwirkt, wobei das Stirnrad über eine Pendelplatte angetrieben wird, welche über ein Zahnradelement mit dem Antrieb der Spule antriebsmäßig verbindbar ist. Vorteilhaft wird über ein mit dem Antrieb der Spule antriebsmäßig verbindbare Pendelplatte die spindelförmige Pilotwelle einer oszillierenden Drehbewegung unterzogen, welche beim Betätigen der Kurbel einer Rolleneinheit das eine Schnuröse aufweisende Schlittenelement parallel zur Spulenachse zum Auf- und Abwickeln der Angelschnur auf die Spule periodisch hin- und herbewegt. Die erfindungsgemäße Ausgestaltung der Schnurführung ermöglicht hierdurch ein äußerst gleichmäßiges Auf- bzw. Abwickeln der Angelschnur auf die bzw. von der Spule bzw. Rolle einer zugehörigen Rolleneinheit. Die erfindungsgemäße Schnurführung kann wasserdicht ausgestaltet werden und ersetzt eine fehleranfällige Wormshaft-Welle.

Weiterhin vorteilhaft ist über ein Schaltelement der Antrieb der Schnurführung von dem Antrieb der Spule abkoppelbar.

Das Schlittenelement weist besonders vorteilhaft neben dem Führungskanal eine Bohrung auf, in der eine parallel zur spindelförmigen Pilotwelle angeordnete Führungsschiene geführt wird, wobei die Längsachse des Führungskanals und/oder der Bohrung senkrecht zur Längsachse der Schnuröse angeordnet sind.

Das Stirnrad ist kreisscheibenförmig ausgestaltet und weist mehrere Antriebszähne auf, die mit dem Pilotzahnrad zusammenwirken. Vorteilhaft umfasst das Stirnrad zumindest eine Aussparung, in die zumindest ein von der Bodenfläche der Pendelplatte abstehendes Lagerelement eingreift.

Die Pendelplatte weist weiterhin vorteilhaft eine kreisbogenförmige Aussparung auf, in der das Zahnradelement geführt wird, wobei in der kreisbogenförmigen Aussparung mehrere Pilotstifte angeordnet sind, die senkrecht von der Deckelfläche der Pendelplatte wegstehen und ein Kreisbogensegment nachbilden. Die kreisbogenförmige Aussparung umfasst eine obere und untere Führung, die an einem linken und rechten äußeren Wendepunkt kreisbogenförmig ineinander übergehen. Ferner können oberhalb und unterhalb der kreisbogenförmigen Aussparung entlang der Symmetrieachse der Pendelplatte ein erstes und zweites Lagerelement angeordnet sein, welche senkrecht von der Bodenfläche der Pendelplatte wegstehen. Weiterhin vorteilhaft sind die Pilotstifte symmetrisch zur Symmetrieachse der Pendelplatte in der Aussparung angeordnet.

Das Zahnradelement weist ein Lagerelement auf, welches über die obere oder untere Führung geführt wird. Das erste Zahnrad des Zahnradelementes wirkt mit den Pilotstiften der Pendelplatte zusammen und das zweite Zahnrad ist mit einem Antriebszahnrad des Antriebs der Spule antriebsmäßig verbindbar.

Vorteilhaft führt die Pendelplatte zum Antrieb der spindelförmigen Pilotwelle eine oszillierende Pendeldrehbewegung aus, die über die auf dem Stirnrad vorgesehen Antriebszähne und dem in diese eingreifenden Pilotzahnrad der spindelförmigen Pilotwelle in eine oszillierende Drehbewegung der spindelförmigen Pilotwelle umgesetzt wird.

Die erfindungsgemäße Schnurführung eignet sich für Rolleneinheiten, insbesondere Multirollen jeglicher Art, insbesondere auch für solche für Links- oder Rechtshänder.

Weiterbildungen der Erfindung sind Gegenstand der Unteransprüche.

Die Erfindung wird im Folgenden anhand der Figuren an einem Ausführungsbeispiel näher erläutert. Es zeigen:
- Fig. 1: in vereinfachter und explosionsartiger Darstellung eine Angelgerte zusammen mit einer an der Angelgerte befestigten Rolleneinheit und zugehöriger Befestigungsvorrichtung;

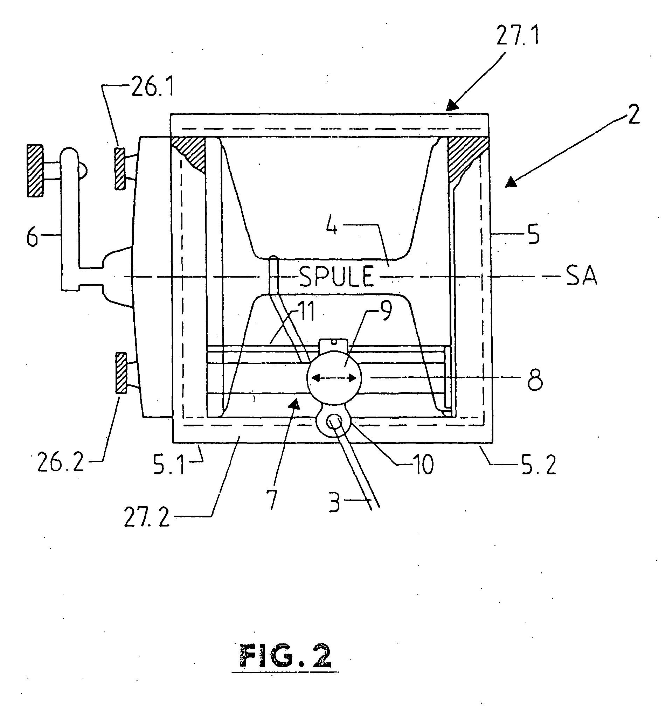

- Fig. 2: die Rolleneinheit in Einzeldarstellung;
- Fig. 3: in vereinfachter Darstellung und in Draufsicht eine Schnurführung ;
- Fig. 4: in vereinfachter Darstellung und in Seitenansicht das Schlittenelement der Schnurführung;
- Fig. 5: in Seitenansicht das Stirnrad des Pendelantriebs;

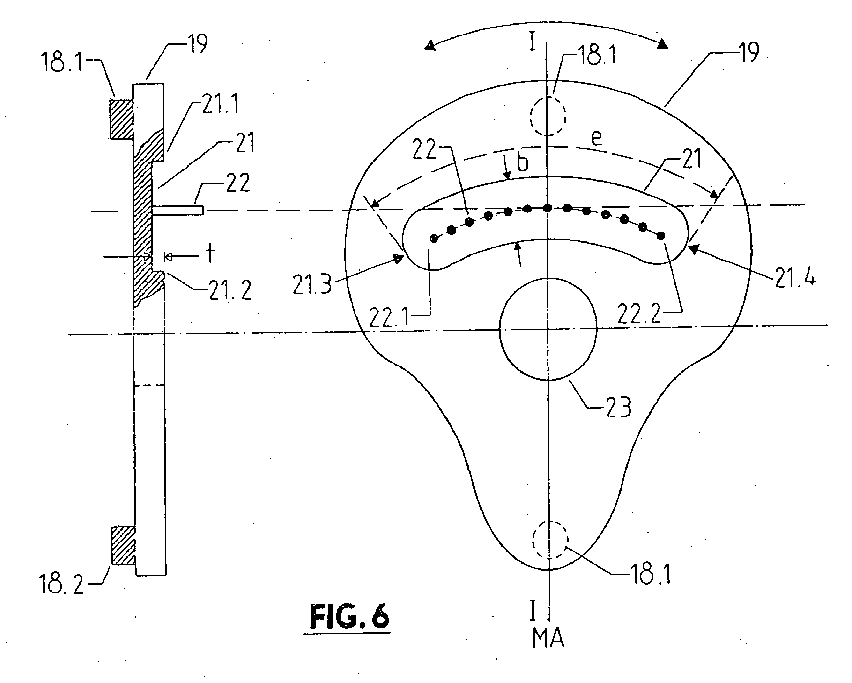

- Fig. 6: in Seitenansicht die Pendelplatte sowie einen Schnitt durch die Pendelplatte entlang der Linie I-I bzw. der Mittelachse MA;
- Fig. 7: in vereinfachter Darstellung und Seitenansicht die einzelnen Komponenten des Pendelantriebs;
- Fig. 8: in Seitenansicht das in die Pendelplatte eingreifende Zahnradelement und
- Fig. 9: in vereinfachter Darstellung das in der Aussparung der Pendelplatte geführte Zahnradelement.

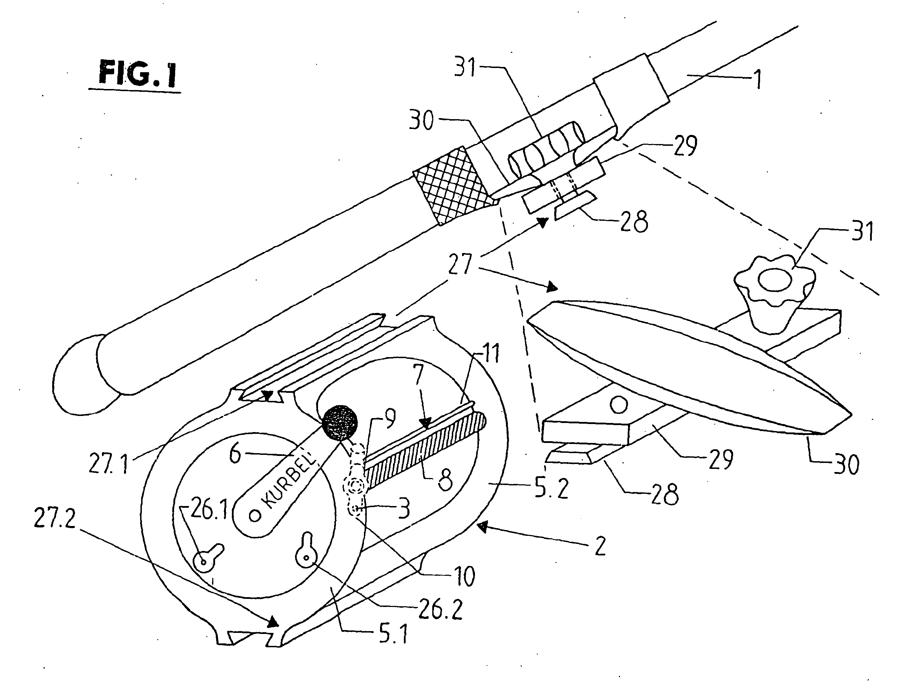

In den Figuren ist 1 eine Angelgerte oder -rute, an der eine Befestigungsvorrichtung 27 zur Befestigung einer Winde oder Rolleneinheit 2 zum manuellen Auf- und Abwickeln der Angelschnur 3 vorgesehen ist. In der Darstellung der Figur 1 ist eine hängende Montage der Rolleneinheit 2 an der Angelgerte 1 vorgesehen, d. h. die Rolleneinheit 2 befindet sich an der Rutenunterseite. Grundsätzlich könnte die Rolleneinheit aber auch stehend angeordnet sein, d. h. an der Rutenoberseite.

Die Rolleneinheit 2 besteht in bekannter Weise im Wesentlichen aus einer Spule 4, die zum Auf- und Abwickeln der Angelschnur 3 um eine Spulenachse drehbar zwischen den beiden Teilen 5.1, 5.2 eines Spulengehäuses 5 gelagert ist. Über eine Kurbel 6 an der Außenseite eines Gehäuseteils 5.1 des Spulengehäuses 5 sowie über ein in diesem Gehäuseteil 5.1 untergebrachtes Getriebe bzw. Wendegetriebe ist die Spule 4 manuell antreibbar.

Zwischen den beiden Gehäuseteilen 5.1, 5.2 ist parallel zur Spulenachse SA und gegenüber dieser versetzt eine Schnurführung 7 vorgesehen, die an einer Schlittenführung 8 ein Schlittenelement 9 mit einer Schnuröse 10 aufweist, die zusammen mit dem Schlitten 9 zum optimalen Aufwickeln der Angelschnur 3 mit der Drehbewegung der Spule 4 entlang der Schlittenführung 8 hin- und herbewegt wird. Darüber hinaus ist das Schlittenelement 9 mit einer Führungsschiene 11 verbunden, über der Abstand zwischen der Schnuröse 10 und der Spulenachse SA konstant gehalten wird, so dass ein Verdrehen des Schlittenelementes 9 auf der Schlittenführung 8 verhindert wird.

Die Schlittenführung 8 ist beispielsweise als Gewindespindel mit einer großen Steigung ausgestaltet, die in einem ein Innengewinde 12 aufweisenden Führungskanal 13 des Schlittenelementes 9 geführt ist. Ferner weist das Schlittenelement 9 eine Bohrung 14 zur Führung der Führungsschiene 11 auf. Die Längsachsen des Führungskanals 13 und der Bohrung 14 verlaufen senkrecht zur Längsachse der Schnuröse 10, wobei die Längsachsen des Führungskanals 13 und der Bohrung 14 in einer bevorzugten Ausführungsform in einer Ebene tiegeln.

Die als Gewindestange ausgebildete Schlittenführung bzw. Pilotwelle 8 ist in einer bevorzugten Ausführungsform zwischen den beiden Gehäuseteile 5.1, 5.2 eingespannt und über ein am Ende der Pilotwelle 8 vorgesehenes Pilotzahnrad 15 mit einem Stirnrad 16 antriebsmäßig verbunden. Das Stirnrad 16 ist beispielsweise in einem der beiden Gehäuseteile 5.1 vorgesehen und weist zum Antrieb des Pilotzahnrades 15 mehrere Antriebszähne 16.1 auf, die an auf dem Rand des kreisscheibenförmig ausgebildeten Stirnrades 16 vorgesehen sind.

Darüber hinaus weist das Stirnrad 16 eine erste und zweite nahezu rechteckförmige Aussparung 17.1, 17. 2 auf, in der ein erstes bzw. zweites Lagerelement 18.1, 18.2 einer Pendelplatte 19 in montiertem Zustand eingreifen. Zusätzlich ist eine kreismittig angeordnete Lagerbohrung 20 im Stirnrad 16 vorgesehen, über die beispielsweise eine drehbare Lagerung um die Drehachse bzw. Spulenachse SA erfolgt. Somit wird die spindelförmige Pilotwelle 8 über das Pilotzahnrad 15, welches beispielsweise in Verbindung mit den Antriebszähnen 16.1 des Stirnrades 16 steht, angetrieben. Hierzu führt das Stirnrad 16 pendelartige beispielsweise viertelkreisförmige Drehungen um die Spulenachse SA aus, und zwar abwechselnd im und gegen den Uhrzeigersinn.

Diese pendelartig abwechselnden Drehbewegungen werden über die Pendelplatte 19 erzeugt und über das erste bzw. zweite Lagerelement 18.1, 18.2, welche in die erste bzw. zweite Aussparung 17.1, 17.2 des Stirnrades eingreifen, von der Pendelplatte 19 auf das Stirnrad 16 übertragen. Hierbei können das erste und zweite Lagerelement 18.1, 18.2 als herkömmliche Kugellagerelemente ausgestaltet sein. Insbesondere sind die pendelartig abwechselnden Drehbewegungen der spindelförmigen Pilotwelle 8 hierbei derart bemessen, dass das Schlittenelement 9 gleichmäßig schnell zwischen dem einem Gehäuseteile 5.1 und dem anderen Gehäuseteil 5.2 der Spule 4 oszilliert. Ferner ergibt sich beim Wechsel der Drehbewegung vom Uhrzeigersinn in den Gegenuhrzeigersinn und umgekehrt, d.h. bei Erreichen des linken oder rechten Endes der spindelförmigen Schlittenführung 8 durch das Schlittenelement 9 zwischen den beiden Gehäuseteilen 5.1, 5.2, ein kurzer Stillstand des Schlittenelementes 9, wodurch insbesondere im Randbereich der Spule 4 ein optimiertes Auf- und Abspulen der Angelschnur 3 erzielbar ist.

Zur Erzeugung einer derartig oszillierenden Bewegung weist die Pendelplatte 19 eine kreisbogenförmige Aussparung 21 innerhalb der Trägerplatte 19 auf, welche eine Tiefe t, eine Breite b sowie eine Länge 1 aufweist. In der Aussparung 21 der Schlittenführung sind in gleichen Abständen zueinander angeordnete Pilotstifte 22 vorgesehen, die entlang einer kreisbogenförmigen Linie angeordnet sind. Die Pilotstifte können beispielsweise als Stahlstifte mit einer die Tiefe t der Aussparung 21 überschreitenden Länge ausgestaltet sein, deren Durchmesser und Abstand zueinander unterschiedlich gewählt werden kann.

Die Aussparung 21 weist eine obere und untere Führung 21.1, 21.2 auf, welche an dem linken und rechten Ende bzw. Wendepunkt 21.3, 21.4 halbkreisförmig ineinander übergehen. Der linke und rechte Wendepunkt 21.3, 21.4 sind somit jeweils um einen ersten und zweiten äußeren Pilotstift 22.1, 22.2 halbkreisförmig ausgebildet ist, wobei der erste und zweite äußere Pilotstift 22.1, 22.2 sowie die weiteren Pilotstifte 22 jeweils denselben Abstand zu der oberen und unteren Führung

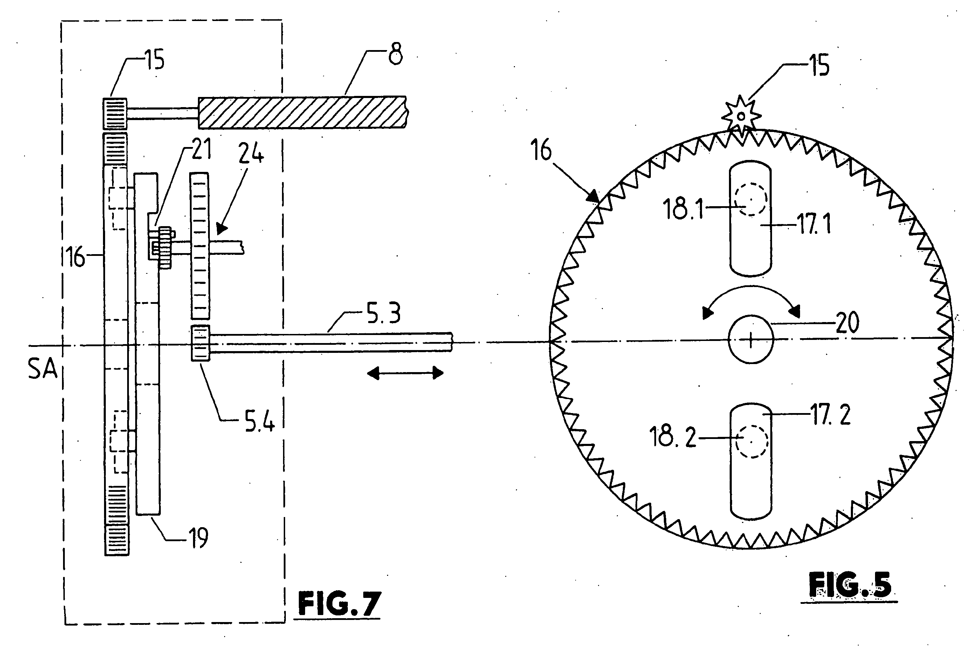

21.1, 21.2 der Aussparung 21 aufweisen, der beispielsweise der halben Breite b/2 entspricht. Darüber hinaus weist die Pendelplatte 19 eine die Spulenachse SA umschließende Öffnung 23 auf, welche mit Ihrem Mittelpunkt auf einer senkrecht zur Spulenachse SA verlaufenden Symmetrieachse MA der Pendelplatte 19 zu liegen kommt und entlang der ebenfalls das erste und zweite Lagerelement 18.1, 18.2 angeordnet sind. Das erste und zweite Lagerelement 18.1, 18.2 stehen hierbei senkrecht von der der Aussparung 21 gegenüber liegenden Bodenfläche der Pendelplatte 19 ab und sind - wie in den Figuren 5 und 7 angedeutet - in den beiden rechteckförmigen, an Ihren Enden ebenfalls halbkreisförmig ausgestalteten Aussparungen 17.1, 17.2 des Stirnrades 16 geführt.

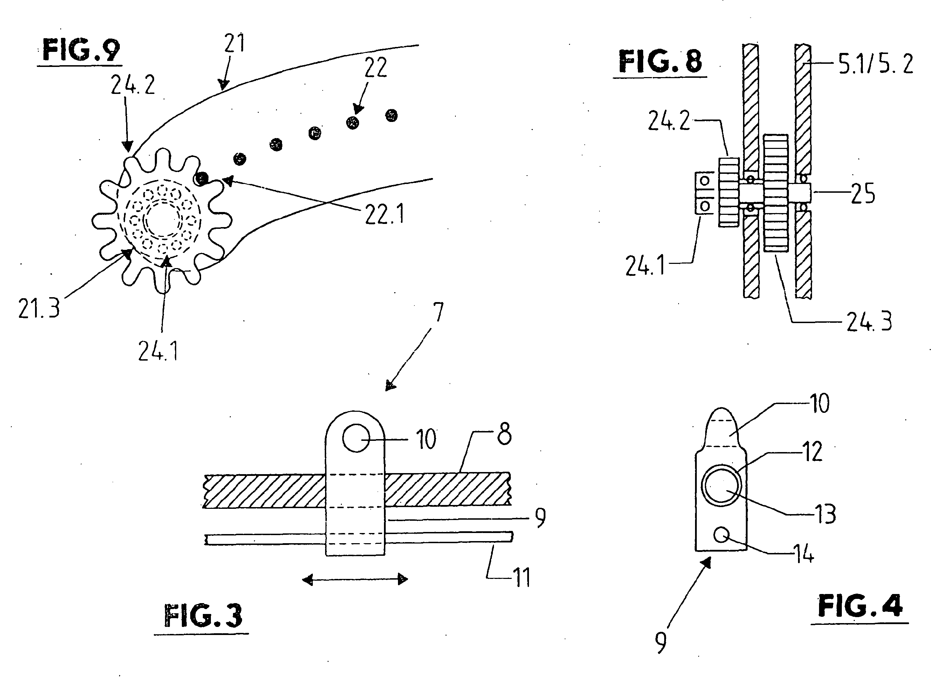

Ein mit dem Antrieb 5.3 der Spule 4, insbesondere über ein Antriebszahnrad 5.4 verbundenes Zahnradelement 24 greift über ein Lagerelement 24.1 in die Aussparungen 21 der Pendelplatte 19 ein und wird zwischen den Pilotstiften 22 und der oberen oder unteren Führung 21.1, 21.2 der Aussparung 21.1, 21.2 geführt. Ferner weist das Zahnradelement 24 ein erstes Zahnrad 24.2 sowie ein zweites Zahnrad 24.3, welche über eine Verbindungsstange 25 miteinander verbunden sind. Das erste Zahnrad 24.2 greift in die Pilotstangen 22 der Pendelplatte 19 ein und rollt entlang der Pilotstifte 22 auf der durch diese vorgegebenen viertelkreisförmigen Bahn ab, wobei hierbei das Zahnradelement 24 über das beispielsweise an der oberen oder unteren Führung 22.1, 22.2 anliegende Lagerelement 24.1 geführt wird. Am linken oder rechten äußeren Pilotstift 22.1, 22.2, folgt das Zahnradelement 24 den halbkreisförmigen Wendepunkten 21.3, 21.4 und beschreibt somit eine Umkehrbewegung, um das zuvor zurückgelegte Kreisbahnstück im Gegensinn zu durchlaufen. In Figur 9 ist beispielhaft das im lenken Wendepunkt 21.3 befindliche und den linken äußeren Pilotstift 22.1 geführte erste Zahnrad 24.2 während der Umkehrbewegung dargestellt.

Aufgrund dieser die Pilotstifte 22, 22.1, 22.2 umkreisenden Bewegung des ersten Zahnrades 24.2 des Zahnradelementes 24 wird eine oszillierende Hin- und

Herbewegung der Pendelplatte 19 um die Spulenachse SA erzeugt, welche über das erste und zweite Lagerelement 18.1, 18.2 auf das Stirnrad 16 übertragen wird, das über die Antriebszähne 16.1 die Pilotwelle 8 der Schnurführung 7 antreibt. Die Drehrichtung der Pilotwelle 8 wechselt somit bei einem Wechsel des ersten Zahnrades 24.2 von der oberen auf die untere Führung 21.1, 21.2 der Aussparung 21 der Pendelplatte 19 und umgekehrt. Hierbei ist die Gewindesteigung der Pilotwelle 8, die Anzahl der Pilotstifte und die Übersetzung zwischen Stirnrad 16 und Zahnrad 15 derart aufeinander abgestimmt, dass beim Auf- oder Abspulen der Angelschnur 3 die Schnurführung 7 parallel zur Spulenachse SA gleichmäßig zwischen den beiden Gehäuseteilen 5.1, 5.2 hin- und herbewegt wird.

Aufgrund der halbkreisförmigen Ausgestaltung der Schlittenführung 21 an den beiden Enden wird ein kurzzeitiger Stillstand der Pilotwelle realisiert, der eine perfekte Führung der Spule beim Aufwickeln der Schnur bewirkt, so dass insbesondere im Randbereich auch eine gleichmäßige Aufwicklung der Angelschnur 3 durchführbar wird.

Das zweite Zahnrad 24.3 des Zahnradelementes 24 steht über das Antriebszahnrad 5.4 mit dem Antrieb 5.3 der Spule 5 in Verbindung, über welche die über die Kurbel 6 erzeugte Drehbewegung über den Antrieb 5.3 in eine oszillierende Hin- und Herbewegung der Schnurführung 7 bzw. dessen Schlittenelements 9 umgesetzt wird.

Ferner ist der Antrieb 5.3 der Spule über ein Schaltelement, beispielsweise ein seitlich am Gehäuseteil 5.1 vorgesehenen erster Druckknopf bzw. Schalthebel 26.1 abschaltbar, so dass bei einem Riss der Angelschnur 3 die Schnurführung 7 bzw. das Schlittenelement 9 und die Wicklung der Angelschnur 3 auf der Spule zueinander synchronisiert werden können. Hierzu wird durch Drücken des ersten Druckknopfes bzw. Umlegen des ersten Schalthebels 26.1 am Gehäuse 5 der Antrieb der Schnurführung 7 von der Spule 4 abgekoppelt, d.h. die Schnurführung 7 verbleibt somit in der aktuellen Stellung. Nun kann die gerissene Angelschnur 3 vom Angler wieder in die Schnuröse 10 neu eingefädelt werden und die Angelschnur 3 solange von der Spule 4 durch händisches Ziehen abgewickelt werden, bis die Position der Schnurführung 7 und die aktuelle Windungsposition der auf der Spule 4 gewickelten Angelschnur 3 übereinstimmen und diese somit synchron zueinander in Hinblick auf Winkelrichtung und Wickelposition verlaufen. Nach erfolgter Ausrichtung der Schnurwicklung bezogen auf die aktuellen Position der Schnurführung 7 wird der erste Druckknopf 26.1 wieder losgelassen bzw. der erste Schalthebel 26.1 wieder umgelegt und der Antrieb der Schnurführung 7 rastet spätestens bei der nächsten Betätigung der Kurbel 6 wieder ein. Hierdurch kann auf einfache Art und Weise nach einer gerissenen Angelschnur 3 diese mit der "geparkten" Schnurführung 7 erneut synchronisiert werden, wodurch ein an die letzte Angelschnurwindung auf der Spule 4 dicht anschließendes weiteres Aufwickeln der Angelschnur 3 gewährleistet ist.

Bei dieser Ausführungsform der Erfindung ist darüber hinaus eine Rolleneinheit 2 mit einem Wendegetriebe vorgesehen, durch das die Antriebsrichtung der Spule 4 umgeschaltet werden kann. Zum Umschalten der Drehrichtung der Spule, d.h. zum Umschalten des Wendegetriebes ist ein zweiter Druckknopf bzw. Schalthebel 26.2 am Gehäuse 5 vorgesehen. Insbesondere beim Wechsel der Rolleneinheit 2 zur Umstellung von Links- auf Rechtshandbetrieb bzw. zur Montage der Rolleneinheit 2 auf der Gerte 1 stehend bzw. oder an der Gerte 1 hängend entfällt aufgrund der Verwendung eines Wendegetriebes ein lästiges Umspulen der Schnur 3 auf der Spule 4.

Zur Befestigung der Rolleneinheit 2 an der Gerte 1 ist darüber hinaus eine verschiebbare Befestigungsvorrichtung 27 vorgesehen, die aus einer ersten und zweiten um 180° versetzt jeweils auf oder zwischen den beiden Gehäuseteilen 5.1, 5.2 vorgesehenen Prismenführungen 27.1, 27.2 vorgesehen, welche einander gegenüberliegend auf einer Parallelen zur Spulenachse SA am Gehäuse 5 angeordnet oder in das Gehäuse 5 integriert sind. Ferner weist die verschiebbare Befestigungsvorrichtung 27 ein Prismenschlittenelement 28, das über ein

Bodenelement 29 mit einem im montierten Zustand senkrecht zur Längsachse der Rute 1 verlaufenden Halteelement 30 verbunden ist. Das Halteelement 30 und das Bodenelement 29 bzw. das Prismenschlittenelement 28 sind hierbei senkrecht zueinander angeordnet. Zur Befestigung der Rolleneinheit 2 wird das Prismenschlittenelement 28 Befestigungsvorrichtung 27 in die erste oder zweite Prismenführung 27.1, 27.2 eingeführt und über eine am Bodenelement 29 vorgesehen Klemmschraube 31 fixiert.

Über die beschriebene verschiebbare Befestigungsvorrichtung 27 und das Wendegetriebe sowie die beschriebene Schnurführung wird ein "4 in ONE" Betrieb der Rolleneinheit 2 möglich, d.h. die Rolleneinheit 2 kann auf einfache Art und Weise über wenige Handgriffe von Links- auf Rechtshänderbetrieb oder Unter- oder Obergertenbetrieb umgestellt werden. Durch das Wendegetriebe ist sichergestellt, dass unabhängig von der jeweiligen Montage der Rolleneinheit 2 an der Gerte 1 die Drehrichtung der Spule 4 gleich bleibt. Auch ist ein Ausbalancieren der an der Gerte 1 montieren Rolleneinheit 2 durch Verschiebung des Prismenschlittenelementes 28 der Befestigungsvorrichtung 27 in der ersten oder zweiten Prismenführung 27.1, 27.2 möglich, wodurch die Rolleneinheit 2 relativ zur Gerte 1 seitlich verschoben wird.

Die Erfindung wurde voranstehend an einem Ausführungsbeispiel beschrieben. Es versteht sich, dass zahlreiche Änderungen sowie Abwandlungen möglich, ohne das dadurch der Schutzbereich der Erfindung gemäß der nachstehen den Ansprüche verlassen wird.

### Bezugszeichenliste

- 1: Angelrute
- 2: Rolleneinheit
- 3: Angelschnur
- 4: Spule der Rolleneinheit
- 5: Spulengehäuse
- 5.1: Gehäuseteil
- 5.2: Gehäuseteil
- 5.3: Antrieb
- 5.4: Antriebszahnrad
- 6: Kurbel
- 7: Schnurführung
- 8: Schlittenführung bzw. Pilotwelle
- 9: Schlittenelement
- 10: Schnuröse
- 11: Führungsschiene
- 12: Innengewinde
- 13: Führungskanal
- 14: Bohrung
- 15: Pilotzahnrad
- 16: Stirnrad
- 16.1: Antriebszähne
- 17.1: erste Aussparung
- 17.2: zweite Aussparung
- 18.1: erstes Lagerelement
- 18:2: zweites Lagerelement
- 19: Pendelplatte
- 20: Lagerbohrung
- 21: Aussparung
- 21.1: obere Führung
- 21.2: untere Führung
- 21.3: linker Wendepunkt der Aussparung
- 21.4: rechter Wendepunkt der Aussparung
- 22.1: linker äußerer Pilotstift
- 22.1: rechter äußerer Pilotstift
- 23: Öffnung
- 24: Zahnradelement
- 24.1: Lagerelement
- 24.2: erstes Zahnrad
- 24.3: zweites Zahnrad
- 25: Verbindungsstange
- 26.1: erster Schalthebel bzw. Druckknopf
- 26.2: zweiter Schalthebel bzw. Druckknopf
- 27: verschiebbare Befestigungsvorrichtung
- 27.1: erste Prismenführung
- 27.2: erste Prismenführung
- 28: Prismenschlittenelement
- 29: Bodenelement
- 30: Halteelement
- 31: Klemmschraube
- SA: Spulenachse
- MA: Symmetrieachse der Pendelplatte

## Patentansprüche

1. Schnurführung für eine Rolleneinheit (2) zum Auf- und Abwickeln einer Angelschnur (3) auf bzw. von einer Spule (4), die am Gehäuse (5) der Rolleneinheit (2) vorgesehen ist, wobei die Schnurführung (7) eine Schlittenführung (8) und ein Schlittenelement (9) mit wenigstens einer Schnuröse (10) aufweist und die Schlittenführung (8) antriebsmäßig mit den Getriebe der Spule (4) verbindbar ist, wobei die Schlittenführung (8) als spindelförmige Pilotwelle (8) ausgestaltet ist und das Schlittenelement (9) zur Führung auf der spindelförmigen Pilotwelle (8) einen Führungskanal (13) mit einem Innengewinde (12) aufweist, **dadurch gekennzeichnet, dass** an der spindelförmigen Pilotwelle (8) ein Pilotzahnrad (15) vorgesehen ist, dass mit einem Stirnrad (16) zusammenwirkt und dass das Stirnrad (16) über eine Pendelplatte (19) angetrieben wird, welche über ein Zahnradelement (24) mit dem Antrieb (5.3) der Spule (4) antriebsmäßig verbindbar ist.

2. Schnurführung nach Anspruch 1, **dadurch gekennzeichnet, dass** über ein Schaltelement (26) der Antrieb der Schnurführung (7) von dem Antrieb (5.3) der Spule (4) abkoppelbar ist.

3. Schnurführung nach Anspruch 1 oder 2, **dadurch gekennzeichnet, dass** das Schlittenelement (9) neben dem Führungskanal (13) eine Bohrung (14) aufweist, in der eine parallel zur spindelförmigen Pilotwelle (8) angeordnete Führungsschiene geführt wird und/oder dass die spindelförmige Pilotwelle (8) parallel zur Spulenachse (SA) und zwischen den beiden Gehäuseteilen (5.1, 5.2) des Gehäuses (5) der Rolleneinheit (2) angeordnet ist.

4. Schnurführung nach Anspruch 3, **dadurch gekennzeichnet, dass** die Längsachse des Führungskanals (13) und/oder der Bohrung (14) senkrecht zur Längsachse zur Schnuröse (10) angeordnet sind.

5. Schnurführung nach einem der Ansprüche 1 bis 4, **dadurch gekennzeichnet, dass** das Stirnrad (16) kreisscheibenförmig ausgestaltet ist und mehrere Antriebszähne (16.1) aufweist, die mit dem Pilotzahnrad (15) zusammenwirken, und/oder dass das Stirnrad (16) zumindest eine Aussparung (17.1, 17.2) aufweist, in die zumindest ein von der Bodenfläche der Pendelplatte (19) abstehendes Lagerelement (18.1, 18.2) eingreift.

6. Schnurführung nach einem der Ansprüche 1 bis 5, **dadurch gekennzeichnet, dass** die Pendelplatte (19) eine kreisbogenförmige Aussparung (21) aufweist, in der das Zahnradelement (24) geführt wird, wobei in der kreisbogenförmigen Aussparung (21) mehrere Pilotstifte angeordnet sind, die senkrecht von der Deckelfläche der Pendelplatte (19) wegstehen und ein Kreisbogensegment nachbilden.

7. Schnurführung nach Anspruch 6, **dadurch gekennzeichnet, dass** die kreisbogenförmige Aussparung (21) einen obere und untere Führung (21.1, 21.2) aufweist, die an einem linken und rechten äußeren Wendepunkt (21.3, 21.4) kreisbogenförmig ineinander übergehen und/oder dass oberhalb und unterhalb der kreisbogenförmigen Aussparung (21) entlang der Symmetrieachse (MA) der Pendelplatte (19) ein erstes und zweites Lagerelement (18.1, 18.2) angeordnet sind, welche senkrecht von der Bodenfläche der Pendelplatte (19) wegstehen.

8. Schnurführung nach Anspruch 6 oder 7, **dadurch gekennzeichnet, dass** die Pilotstifte (22) symmetrisch zur Symmetrieachse (MA) der Pendelplatte (19) in der Aussparung (21) angeordnet sind und/oder dass das Zahnradelement (24) ein Lagerelement (24.1) aufweist, welches über die obere oder untere Führung (21.1, 21.2) geführt wird.

9. Schnurführung nach einem der Ansprüche 6 bis 8, **dadurch gekennzeichnet, dass** das erste Zahnrad (24.2) des Zahnradelementes (24) mit den Pilotstiften (22) der Pendelplatte (19) zusammenwirkt und dass das zweite Zahnrad (24.3) mit einem Antriebszahnrad (5.4) des Antriebs (5.3) der Spule (4) antriebsmäßig verbindbar ist.

10. Schnurführung nach einem der Ansprüche 6 bis 9, **dadurch gekennzeichnet, dass** die Pendelplatte (19) zum Antrieb der spindelförmigen Pilotwelle (8) eine oszillierende Pendeldrehbewegung ausführt, die über die auf dem Stirnrad (16) vorgesehen Antriebszähne (16.1) und dem in diese eingreifenden Pilotzahnrad (15) der spindelförmigen Pilotwelle (8) in eine oszillierende Drehbewegung der spindelförmigen Pilotwelle (8) umgesetzt wird.

11. Rolleneinheit für eine Angelschnur zur Verwendung an einer Angelgerte (1), mit einem Gehäuse (5), mit einer am Gehäuse drehbar gelagerten und durch eine Kurbel (6) über ein Getriebe drehbaren Spule (4) zum Auf- und Abwinkeln der Angelschnur (3) auf die Spule (4), **dadurch gekennzeichnet, dass** die Schnurführung (7) entsprechend einem der vorhergehenden Ansprüche ausgebildet ist.

12. Rolleneinheit nach Anspruch 19, **dadurch gekennzeichnet, dass** das Getriebe der Spule als Wendegetriebe ausgestaltet ist, welches über ein am Gehäuse (5) der Spule (4) vorgesehenes Schaltelement (26.2) umschaltbar ist und/oder dass über ein am Gehäuse (5) der Spule (4) vorgesehenes Schaltelement (26.1) der Antrieb der Schnurführung (7) ein- und ausschaltbar ist.

## Claims

1. Line guide for a reel unit (2) for winding and unwinding a fishing line (3) onto and off from a spool (4) which is provided on the housing (5) of the reel unit (2) wherein the line guide (7) has a slide guide (8) and a sliding element (9) with at least one line eyelet (10) and the slide guide (8) is connectable drivewise to the gearing of the spool (4) wherein the slide guide (8) is formed as a spindle-shaped pilot shaft (8) and the sliding element (9) has a guide channel (13) with an inner thread (12) for guidance on the spindle-shaped pilot shaft (8), **characterised in that** a pilot gearwheel (15) is provided on the spindle-shaped pilot shaft (8), and interacts with a spur wheel (16) and that the spur wheel (16) is driven by a pendulum plate (19) which is connectable drivewise to the drive (5.3) of the spool (4) by way of a gearwheel element (24).

2. Line guide according to claim 1 **characterised in that** the drive of the line guide (7) can be uncoupled from the drive (5.3) of the spool (4) by way of a switch element (26).

3. Line guide according to claim 1 or 2 **characterised in that** the slide element (9) has in addition to the guide channel (13) a bore (14) in which a guide rail arranged parallel to the spindle-shaped pilot shaft (8) is guided and/or that the spindle-shaped pilot shaft (8) is mounted parallel to the spool axis (SA) and between the two housing parts (5.1, 5.2) of the housing (5) of the reel unit (2).

4. Line according to claim 3 **characterised in that** the longitudinal axis of the guide channel (13) and/or the bore (14) is/are arranged perpendicular to the longitudinal axis of the line eyelet (10).

5. Line guide according to one of claims 1 to 4 **characterised in that** the spur wheel (16) is designed in the form of a circular disc and has several drive teeth (16.1) which interact with the pilot gear wheel (15), and/or that the spur wheel (16) has at least one recess (17.1, 17.2) in which at least one bearing element (18.1, 18.2) engages which protrudes from the base surface of the pendulum plate (19).

6. Line guide according to one of claims 1 to 5 **characterised in that** the pendulum plate (19) has a circular arc shaped recess (21) in which the gear wheel element (24) is guided wherein several pilot pins which protrude perpendicularly from the top surface of the pendulum plate (19) are arranged in the circular arc shaped recess (21) to form a circular arc segment.

7. Line guide according to claim 6 **characterised in that** the circular arc shaped recess (21) has an upper and a lower guide (21.2, 21.2) which at a left and a right outer turning point (21.3, 21.4) run into one another in a circular arc shape and/or that above and below the circular arc shaped recess (21) a first and a second bearing element (18.1, 18.2) are arranged along the axis of symmetry (MA) of the pendulum plate (19) and project perpendicular from the base surface of the pendulum plate (19).

8. Line guide according to claim 6 or 7 **characterised in that** the pilot pins (22) are arranged symmetrical to the axis of symmetry (MA) of the pendulum plate (19) in the recess (21) and/or that the gear wheel element (24) has a bearing element (24.1) which is guided over the upper or lower guide (21.1, 21.2).

9. Line guide according to one of claims 6 to 8 **characterised in that** the first gear wheel (24.2) of the gear wheel element (24) interacts with the pilot pins (22) of the pendulum plate (19) and that the second gear wheel (24.3) is connectable drivewise to a driving gear wheel (5.4) of the drive (5.3) of the spool (4).

10. Line guide according to one of claims 6 to 9 **characterised in that** the pendulum plate (19) in order to drive the spindle-shaped pilot shaft (8) executes an oscillating pendulum rotational movement which is converted into an oscillating rotational movement of the spindle-shaped pilot shaft (8) by way of the drive teeth (16.1) provided on the spur wheel (16) and by the pilot gear wheel (15) of the spindle-shaped pilot shaft (8) engaging in the teeth.

11. Reel unit for a fishing line for use on a fishing rod (1) having a housing (5), a spool (4) mounted rotatable on the housing and rotatable by a crank (6) via a gearing for winding up and unwinding the fishing line (3) on and from the spool (4) **characterised in that** the line guide (7) is designed according to one of the preceding claims.

12. Reel unit according to claim 19 **characterised in that** the gearing of the spool is designed as a reversing gear which can be switched round by a switch element (26.2) provided on the housing (5) of the spool (4) and/or that the drive of the line guide (7) can be switched on and off by way of a switch element (26.1) provided on the housing (5) of the spool (4).

## Revendications

1. Anneau pour une unité de moulinet (2) destinée à enrouler et dérouler un fil de pêche (3) sur ou à partir d'une bobine (4), qui est prévue sur le boîtier (5) de l'unité de moulinet (2), dans lequel l'anneau (7) présente un guidage de curseur (8) et un élément de curseur (9) avec au moins un oeillet guide-fil (10) et le guidage de curseur (8) peut être relié en mode d'entraînement à l'engrenage de la bobine (4), dans lequel le guidage de curseur (8) se présente sous la forme d'un arbre pilote en forme de broche (8) et l'élément de curseur (9) présente un canal de guidage (13) avec un filet intérieur (12) pour le guidage sur l'arbre pilote en forme de broche (8), **caractérisé en ce qu'**il est prévu sur l'arbre pilote en forme de broche (8) une roue dentée pilote (15), qui coopère avec une roue droite (16) et **en ce que** la roue droite (16) est entraînée par l'intermédiaire d'une plaque oscillante (19), qui peut être reliée en mode d'entraînement à l'entraînement (5.3) de la bobine (4) par l'intermédiaire d'un élément de roue dentée (24).

2. Anneau selon la revendication 1, **caractérisé en ce que** l'entraînement de l'anneau (7) peut être dégagé de l'entraînement (5.3) de la bobine (4) par l'intermédiaire d'un élément de débrayage (26).

3. Anneau selon la revendication 1 ou 2, **caractérisé en ce que** l'élément de curseur (9) présente en plus du canal de guidage (13) un perçage (14), dans lequel un rail de guidage disposé parallèlement à l'arbre pilote en forme de broche (8) est guidé et/ou en ce que l'arbre pilote en forme de broche (8) est disposé parallèlement à l'axe de bobine (SA) et entre les deux parties de boîtier (5.1, 5.2) du boîtier (5) de l'unité de moulinet (2).

4. Anneau selon la revendication 3, **caractérisé en ce que** l'axe longitudinal du canal de guidage (13) et/ou du perçage (14) est disposé perpendiculairement à l'axe longitudinal de l'oeillet guide-fil (10).

5. Anneau selon l'une quelconque des revendications 1 à 4, **caractérisé en ce que** la roue droite (16) se présente sous la forme d'un disque circulaire et présente plusieurs dents d'entraînement (16.1), qui coopèrent avec la roue dentée pilote (15), et/ou **en ce que** la roue droite (16) présente au moins une découpe (17.1, 17.2), dans laquelle s'engage au moins un élément de palier (18.1, 18.2) faisant saillie sur la face de fond de la plaque oscillante (19).

6. Anneau selon l'une quelconque des revendications 1 à 5, **caractérisé en ce que** la plaque oscillante (19) présente une découpe en forme d'arc de cercle (21), dans laquelle l'élément de roue dentée (24) est guidé, dans lequel il se trouve dans la découpe en forme d'arc de cercle (21) plusieurs tiges pilotes, qui font saillie perpendiculairement sur la face de couvercle de la plaque oscillante (19) et qui simulent un segment d'arc de cercle.

7. Anneau selon la revendication 6, **caractérisé en ce que** la découpe en forme d'arc de cercle (21) présente un guide supérieur et un guide inférieur (21.1, 21.2), qui se prolongent mutuellement en forme d'arcs de cercle aux points d'inversion extrêmes gauche et droit (21.3, 21.4) et/ou **en ce qu'**il se trouve, au-dessus et en dessous de la découpe en forme d'arc de cercle (21), le long de l'axe de symétrie (MA) de la plaque oscillante (19), un premier et un deuxième éléments de palier (18.1, 18.2), qui font saillie perpendiculairement sur la face de fond de la plaque oscillante (19).

8. Anneau selon la revendication 6 ou 7, **caractérisé en ce que** les tiges pilotes (22) sont disposées dans la découpe (21) de façon symétrique par rapport à l'axe de symétrie (MA) de la plaque oscillante (19) et/ou **en ce que** l'élément de roue dentée (24) présente un élément de palier (24.1), qui est guidé au moyen du guidage supérieur ou inférieur (21.1, 21.2).

9. Anneau selon l'une quelconque des revendications 6 à 8, **caractérisé en ce que** la première roue dentée (24.2) de l'élément de roue dentée (24) coopère avec les tiges pilotes (22) de la plaque oscillante (19) et **en ce que** la deuxième roue dentée (24.3) peut être reliée en mode d'entraînement à une roue dentée d'entraînement (5.4) de l'entraînement (5.3) de la bobine (4).

10. Anneau selon l'une quelconque des revendications 6 à 9, **caractérisé en ce que** la plaque oscillante (19) exécute, pour l'entraînement de l'arbre pilote en forme de broche (8), un mouvement rotatif pendulaire oscillant, qui est converti en un mouvement rotatif oscillant de l'arbre pilote en forme de broche (8) par l'intermédiaire des dents d'entraînement (16.1) prévues sur la roue droite (16) et la roue dentée pilote (15) de l'arbre pilote en forme de broche (8) qui engrènent avec celles-ci.

11. Unité de moulinet pour un fil de pêche à utiliser sur une canne à pêche (1), avec un boîtier (5), avec une bobine (4), montée de façon rotative sur le boîtier et pouvant tourner au moyen d'une manivelle (6) par l'intermédiaire d'un engrenage, pour enrouler et dérouler le fil de pêche (3) sur la bobine (4), **caractérisée en ce que** l'anneau (7) est réalisé selon l'une quelconque des revendications précédentes.

12. Unité de moulinet selon la revendication 11, **caractérisée en ce que** l'engrenage de la bobine se présente sous la forme d'un engrenage réversible, qui peut être inversé au moyen d'un élément d'embrayage (26.2) prévu sur le boîtier (5) de la bobine (4) et/ou **en ce que** l'entraînement de l'anneau (7) peut être embrayé et débrayé au moyen d'un élément d'embrayage (26.1) prévu sur le boîtier (5) de la bobine (4).
